# EUROPÄISCHE PATENTANMELDUNG

(11) **EP 3 855 055 A1**
(43) Veröffentlichungstag der Anmeldung: **28.07.2021**
(21) Anmeldenummer: 21150821.3
(22) Anmeldetag: 11.01.2021
(51) Int. Cl.: F16L 3/10

(54) **ROHRSCHELLE**

(30) Priorität: 24.01.2020 DE 102020101635
(71) Anmelder: fischerwerke GmbH & Co. KG, 72178 Waldachtal (DE)
(72) Erfinder: Kosanke, Timo, 72250 Freudenstadt-Dietersweiler (DE); Gmeiner, Björn, 75389 Neuweiler (DE)
(74) Vertreter: Suchy, Ulrich Johannes

(57) **Zusammenfassung**

Um ein Aufbiegen einer Rohrschelle (1) bei einer Belastung im Sinne eines Öffnens zu vermeiden, schlägt die Erfindung ein in Umfangsrichtung verlaufendes Schließelement (11) vor, das beim Schließen der Rohrschelle (1) von selbst einhängt und am Umfang des Schellenkörpers (2) angreift, so dass ausschließlich Zugkräfte in der Umfangsrichtung und keine Biegemomente wirken.

## Beschreibung

Die Erfindung betrifft eine Rohrschelle mit den Merkmalen des Oberbegriffs des Anspruchs 1.

Eine Rohrschelle ist bekannt aus der Offenlegungsschrift DE 36 01 815 A1. Die bekannte Rohrschelle weist zwei halbkreisförmige, aus Blechstreifen gebogene Schellenbügel auf, die an gegenüberliegenden Umfangsstellen mit Spannschrauben zu einem kreisförmigen Schellenkörper verbindbar beziehungsweise verbunden sind. An einer der beiden Umfangsstellen weist die Rohrschelle ein aus einem Blechstreifen gebogenes Schließelement auf, das gelenkig in einem Durchlass nahe an einem Ende eines der beiden Schellenbügels eingehängt ist, so dass es nach außen schwenken kann. Das Schließelement ist radial nach außen abgewinkelt und weist ein T-förmiges Fenster auf, durch das ein Schraubenkopf der Spannschraube durchtreten und das abgewinkelte Ende des Schließelements hintergreifen kann. Die Spannschraube ist in ein Gewindeloch in einem radial nach außen abgewinkelten Flansch an einem zugeordneten Ende des anderen Schellenbügels geschraubt. Zum Schließen des Schellenkörpers, das zugleich ein Schließen der Rohrschelle ist, werden die auseinander geschwenkten Schellenbügel zusammen geschwenkt, so dass sich ihre Enden nähern, wobei der Schraubenkopf der Spannschraube auf das abgewinkelte Ende des Schließelements trifft und dieses nach außen schwenkt, bis der Schraubenkopf der Spannschraube von innen durch das Fenster im Schließelement durchtreten kann, woraufhin das Schließelement wieder nach innen schwenken kann, so dass der Schraubenkopf das nach außen abgewinkelte Ende des Schließelements hintergreift und die Spannschraube und das Schließelement die zugeordneten Enden der beiden Schellenbügel verbinden, wodurch der Schellenkörper geschlossen ist. Zu einem Festspannen des Schellenkörpers um ein Rohr wird die Spannschraube festgezogen.

Ein Nachteil der bekannten Rohrschelle ist, dass die Spannschraube außerhalb eines gedachten, von den beiden Schellenbügeln ohne den nach außen abgewinkelten Flansch und ohne die Abwinklung des Schließelements nach außen gebildeten Rings an dem nach außen abgewinkelten Flansch und an der Abwinklung des Schließelements nach außen angreift. Dadurch erzeugt die Spannschraube beim Festziehen Biegemomente an dem nach außen abgewinkelten Flansch an dem Ende des anderen Schellenbügels und an der Abwinklung des Schließelements nach außen, die bei einer Beanspruchung der Rohrschelle im Sinne einer Öffnung erhöht werden, was eine Belastbarkeit der Rohrschelle herabsetzt.

Aufgabe der Erfindung ist, eine Rohrschelle mit einem hinsichtlich einer Belastbarkeit gegen ein Öffnen verbesserten Schließmechanismus vorzuschlagen.

Diese Aufgabe wird erfindungsgemäß durch die Merkmale des Anspruchs 1 gelöst. Die erfindungsgemäße Rohrschelle weist einen ringförmigen Schellenkörper auf, der einen Aufnahmeraum bildet, mit einer Öffnung zum Einlegen eines Rohrs an einer ersten Umfangsstelle, wobei der Schellenkörper ein in den Aufnahmeraum eingelegtes Rohr bei geschlossener Rohrschelle umschließt. Der Schellenkörper kann beispielsweise kreisförmig, anders als kreisförmig rund und/oder eckig sein. Er kann beispielsweise einstückig sein, beispielsweise ein biegbares Band aufweisen. Der Schellenkörper kann beispielsweise auch zwei oder mehr Schellenbügel aufweisen, die - zum Öffnen vorzugsweise gelenkig - verbunden beziehungsweise verbindbar sind. Es kann auch ein anderer Gegenstand als ein Rohr in die Rohrschelle eingelegt werden. "Öffnen" der Rohrschelle beziehungsweise des Schellenkörpers bedeutet ein Entfernen von Enden des Schellenkörpers beiderseits der Öffnung voneinander, so dass das Rohr oder etwas anderes durch die Öffnung in den Schellenkörper eingebracht werden kann. Eine Belastung im Sinne eines Öffnens der Rohrschelle beziehungsweise des Schellenkörpers bedeutet eine Belastung des Schellenkörpers im Sinne eines Entfernens seiner von einem Schließelement verbundenen Enden beiderseits der Öffnung voneinander.

An einer Umfangsstelle weist der Schellenkörper eine Öffnung zum Einlegen des Rohrs oder auch eines anderen Gegenstands auf. Enden des Schellenkörpers beiderseits der Öffnung lassen sich zum Einlegen des Rohrs voneinander entfernen, wenn die Enden nicht miteinander verbunden sind. Zum Verbinden der beiden Enden und damit zum Schließen des Schellenkörpers und der Rohrschelle weist die Rohrschelle ein Schließelement auf, das auf einer ersten Seite der Öffnung gelenkig und elastisch nach außen federnd mit dem Schellenkörper verbunden und das zum Schließen des Schellenkörpers auf einer zweiten Seite der Öffnung an dem Schellenkörper einhängbar ist, so dass das Schließelement die beiden Enden des Schellenkörpers beiderseits der Öffnung miteinander verbindet. Unter "elastisch nach außen federnd" ist insbesondere ein Wegschwenken eines Endes des Schließelements vom Schellenkörper zu verstehen. Anders gesprochen kann darunter verstanden werden, dass ein Ende des Schließelements, das zum Verbinden mit der zweiten Seite der Öffnung vorgesehen ist, um ein Gelenk, an dem das Schließelement an der ersten Seite der Öffnung mit dem Schellenkörper gelenkig verbunden ist, elastisch, also entgegen einer Federkraft, in eine Richtung weg von dem Aufnahmeraum und somit weg von dem zu haltenden Rohr geschwenkt werden kann.

Um kein oder allenfalls ein kleines, den Schellenkörper beiderseits der Öffnung belastendes Biegemoment zu erzeugen, wenn der mit dem Schließelement geschlossene Schellenkörper im Sinne eines Öffnens beaufschlagt wird, sieht die Erfindung vor, dass sich das Schließelement von einer gelenkigen Verbindung mit dem Schellenkörper auf einer ersten Seite der Öffnung zu einer Einhängestelle auf einer zweiten Seite der Öffnung ausschließlich in der Umfangsrichtung, einer Sehnenrichtung oder einer Tangentenrichtung des Schellenkörpers erstreckt. Damit ist insbesondere gemeint, dass das Schließelement auf beiden Seiten der Öffnung an einer gedachten, in Umfangsrichtung verlaufenden Ringlinie, die der ein eingelegtes Rohr umschließende Schellenkörper bildet, am Schellenkörper angreift. Ein kleiner Versatz nach außen von nicht mehr als einer Dicke des Schellenkörpers ist möglich.

Bei einer Beanspruchung des geschlossenen Schellenkörpers im Sinne eines Öffnens wirken ausschließlich oder im Wesentlichen ausschließlich Zugkräfte an den Enden des Schellenkörpers beiderseits der Öffnung und kein oder allenfalls ein kleines Biegemoment. Die Gefahr eines Versagens der Rohrschelle durch Verbiegen des Schellenkörpers ist verringert, die Rohrschelle ist gegen ein Öffnen höher belastbar.

Vorzugsweise ist der Schellenkörper durch zwei, insbesondere bogenförmige, Schellenbügel gebildet, wobei an einer zweiten Umfangsstelle des Schellenkörpers, welche insbesondere der ersten Umfangsstelle gegenüber liegt, die Schellenbügel jeweils einen Flansch aufweisen, die mit einer Spannschraube verbunden sind. Insbesondere weist einer der beiden Flansche ein mit der Spannschraube korrespondierendes Innengewindeloch und der andere der beiden Flansche ein Durchsteckloch auf. Die Spannschraube ist durch das Durchsteckloch durchgesteckt und in das Innengewindeloch eingeschraubt. Der Vorteil der Schraubverbindung an der zweiten Umfangsstelle kann darin gesehen werden, dass, wenn die erste Seite der Öffnung durch das Schließelement geschlossen ist, der Aufnahmeraum, abhängig vom Durchmesser des zu haltenden Rohrs, fein nachjustiert werden kann. Die Spannschraube dient in Verbindung mit den beiden Flanschen somit einer Feinjustage, da abhängig von der Gewindesteigung der Spannschraube der Aufnahmeraum in sehr kleinen Schritten verkleinert oder vergrößert werden kann, wodurch eine Klemmkraft auf das Rohr vergrößer- oder verkleinerbar ist und somit ein fester Sitz des Rohrs gewährleistet ist.

Insbesondere befindet sich die gelenkige Verbindung des Schließelements mit dem Schellenkörper auf der ersten Seite der Öffnung und/oder eine Einhängestelle des Schließelements am Schellenkörper auf der zweiten Seite der Öffnung am Umfang des Schellenkörpers und weisen höchstens einen Versatz nach außen um eine Dicke des Schellenkörpers auf. Mit "Umfang" ist die vom Schellenkörper gebildete Ringlinie ohne Ausformungen, Abwinklungen oder dergleichen nach außen gemeint.

Zur gelenkigen Verbindung des Schließelements mit dem Schellenkörper sieht eine Ausgestaltung der Erfindung einen Durchlass im Schellenkörper auf der ersten Seite der Öffnung vor, den das Schließelement durchgreift. Insbesondere ist das Schließelement am Durchlass auf der ersten Seite der Öffnung gelenkig in den Schellenkörper eingehängt. Der Durchlass ist eine Öffnung im Schellenkörper, die zur Unterscheidung von der Öffnung des Schellenkörpers zum Einlegen des Rohrs als "Durchlass" bezeichnet wird. Bei geschlossenem Schellenkörper, das heißt wenn das Schließelement auf der zweiten Seite der Öffnung am Schellenkörper eingehängt ist, liegt ein der zweiten Seite der Öffnung zugewandter Rand des Durchlasses, den das Schließelement durchgreift, an einer Innenseite des Schließelements an. Der Rand des Durchlasses kann lose oder mit einer Vorspannung innen am Schließelement anliegen. Durch die Anlage stützt sich der Schellenkörper auf der ersten Seite der Öffnung gegen Biegen innen am Schließelement ab, wenn der Schellenkörper im Sinne eines Öffnens belastet wird, was den Widerstand gegen Aufbiegen des Schellenkörpers erhöht und die Gefahr eines Versagens der Rohrschelle verringert.

Vorzugsweise liegt bei geschlossenem Schellenkörper, jedenfalls wenn der Schellenkörper im Sinne eines Öffnens beaufschlagt wird, der Schellenkörper auf der zweiten Seite der Öffnung innen am Schließelement an, das heißt auf der zweiten Seite der Öffnung stützt das Schließelement den Schellenkörper bei einer Belastung des Schellenkörpers im Sinne eines Öffnens gegen Aufbiegen, was ebenfalls eine Belastbarkeit des Schellenkörpers gegen Öffnen erhöht.

Eine Ausgestaltung der Erfindung sieht einen Haken auf der zweiten Seite der Öffnung des Schellenkörpers vor, in den das Schließelement bei geschlossenem Schellenkörper eingehängt ist beziehungsweise zum Schließen eingehängt wird. Der Haken durchgreift das Schließelement von innen nach außen und stützt das eingehängt Schließelement von außen gegen Aufbiegen. Insbesondere weist das Schließelement ein Fenster auf, welches von dem Haken durchgriffen wird.

Vorzugsweise weist der Schellenkörper mehrere, in der Umfangsrichtung zueinander versetzte Haken auf der zweiten Seite der Öffnung auf, in die das Schließelement wahlweise einhängbar ist. Das ermöglicht eine stufenweise Einstellung einer Größe eines Umfangs des geschlossenen Schellenkörpers durch Einhängen des Schließelements in einen der Haken. Die Feinjustierung kann, wie weiter oben bereits beschrieben, durch die Spannschraube an der zweiten Umfangsstelle erfolgen.

Zu einer Vermeidung eines unmittelbaren Kontakts zwischen dem Schellenkörper und einem eingelegten Rohr, zu einer elastischen Befestigung des Rohrs im Schellenkörper und/oder zu einer Dämpfung einer Körperschallübertragung von einem eingelegten Rohr auf die Rohrschelle sieht eine Ausgestaltung der Erfindung eine elastische, an einer Innenseite des Schellenkörpers angeordnete Einlage vor. Die Schallschutzeinlage ist insbesondere durch eine erste und eine zweite Schallschutzeinlage gebildet. Eine Weiterbildung dieser Ausgestaltung der Erfindung sieht vor, dass insbesondere die erste elastische Einlage auf der ersten Seite der Öffnung in der Umfangsrichtung bis mindestens zum Ende des Schellenkörpers reicht, so dass sich die erste elastische Einlage dort zwischen einem in der Rohrschelle einliegenden Rohr und dem Schellenkörper befindet. Über die Einlage stützt das Rohr den Schellenkörper bis zu seinem Ende auf der ersten Seite der Öffnung von innen und damit gegen ein Biegen des Schellenkörpers nach innen ab. Auch diese Maßnahme erhöht die Sicherheit der Rohrschelle gegen Aufbiegen ihres Schellenkörpers bei einer Beanspruchung im Sinne eines Öffnens. Die erste Schallschutzeinlage dient zudem durch ihre Elastizität dazu, dass das Schließelement elastisch nach außen federn kann. Die erste Schallschutzeinlage sorgt zudem dafür, dass das Schließelement in dem Durchlass insbesondere leicht klemmend gehalten wird und nicht aus dem Durchlass herausfallen kann. Insbesondere wird die erste Schallschutzeinlage, wenn das Schließelement nach außen federt, von dem Schließelement leicht nach innen gedrückt, wodurch die Federkraft aufgebaut wird. Eine Ausgestaltung der Erfindung sieht vor, dass der Schellenkörper einen Abweiser für das Schließelement auf der zweiten Seite der Öffnung des Schellenkörpers aufweist, der das Schließelement beim Schließen der Rohrschelle vom Schellenkörper nach außen schwenkt, bis es den Abweiser überwunden hat. Diese Ausgestaltung der Erfindung ermöglicht ein selbsttätiges Einhängen des Schließelements am zweiten Ende der Öffnung des Schellenkörpers beim Schließen.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:

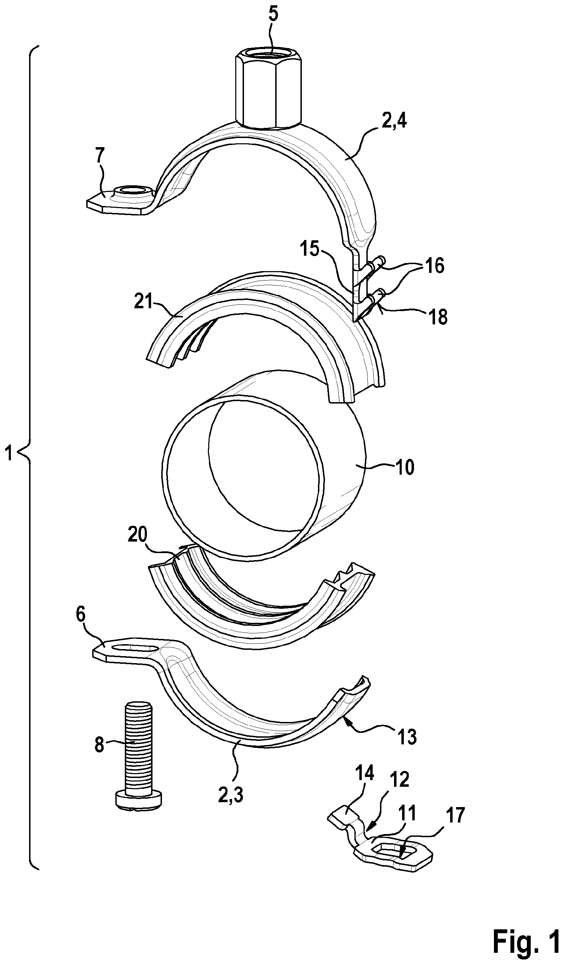

- Figur 1: Einzelteile einer erfindungsgemäßen Rohrschelle in einer perspektivischen Explosionsdarstellung;
- Figur 2: die Rohrschelle aus Figur 1 zusammengebaut in geöffnetem Zustand;
- Figur 3: die Rohrschelle aus Figur 1 zusammengebaut beim Schließen;
- Figur 4: die Rohrschelle aus Figur 1 zusammengebaut in geschlossenem Zustand; und
- Figur 5: eine vergrößerte Schnittdarstellung eines Schließmechanismus der Rohrschelle aus Figur 1 in geschlossenem Zustand.

Die in der Zeichnung dargestellte, erfindungsgemäße Rohrschelle 1 weist einen Schellenkörper 2 mit zwei kreisbogenförmigen Schellenbügeln 3, 4 auf, die aus Blechstreifen gebogen sind, allerdings auch aus einem anderen Material bestehen können.

Ein zweiter der beiden Schellenbügel 4 weist eine außen angeschweißte oder in anderer Weise angeordnete Befestigungsmutter 5 zu einer Befestigung der Rohrschelle 1 an beispielsweise einer Wand oder Decke auf. Anstatt der Befestigungsmutter 5 kann die Rohrschelle 1 beispielsweise einen von einem der beiden Schellenbügel 3, 4 nach außen abstehenden Gewindebolzen aufweisen (nicht dargestellt).

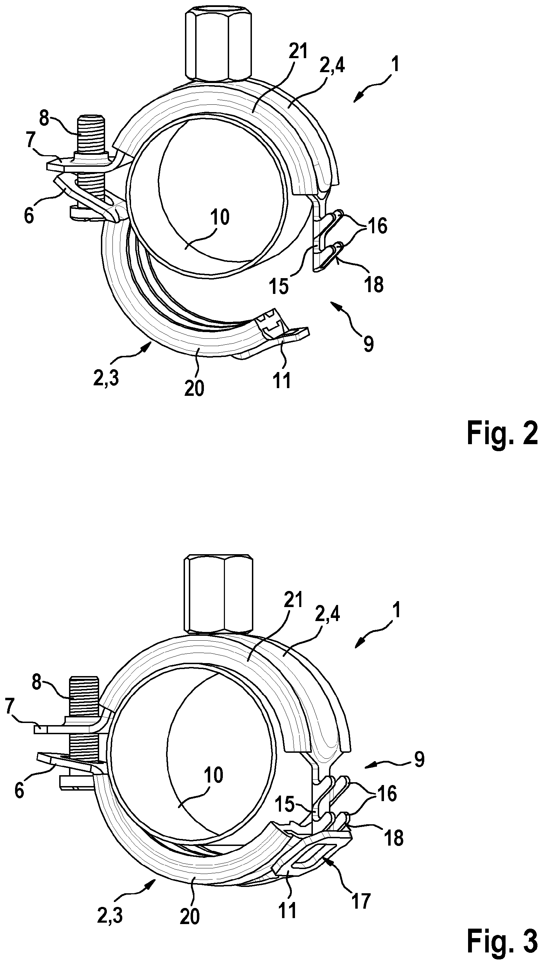

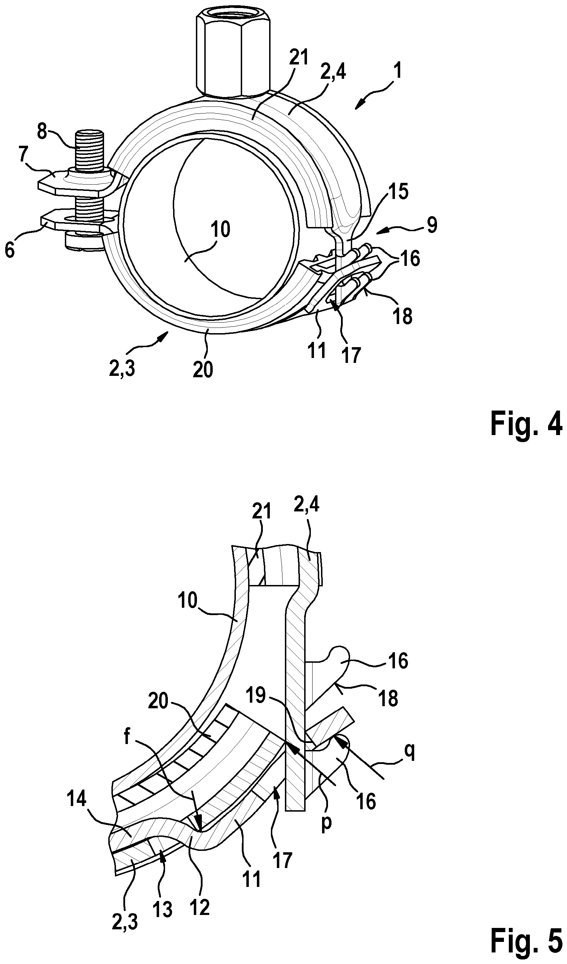

An einer zweiten Umfangsstelle weisen die beiden Schellenbügel 3, 4 radial oder genau genommen zu einer Axialebene parallel nach außen stehende Flansche 6, 7 auf, von denen der erste Flansch 6 ein Durchsteckloch, durch das eine Spannschraube 8 durchgesteckt ist, und der zweite Flansch 7 ein Innengewindeloch, in das die Spannschraube 8 geschraubt ist, aufweisen. Die beiden Schellenbügel 3, 4 sind dadurch gelenkig verbunden und lassen sich, wie in Figur 2 zu sehen, in eine offene Stellung auseinander und, wie in Figur 4 zu sehen, aufeinander zu in eine geschlossene Stellung schwenken.

An einer der Spannschraube 8 beziehungsweise der zweiten Umfangsstelle gegenüberliegenden ersten Umfangsstelle weist der Schellenkörper 2 der Rohrschelle 1 eine Öffnung 9 auf, die von einander zugeordneten Enden der Schellenbügel 3, 4, die zugleich Enden des Schellenkörpers 2 sind, begrenzt wird. Bei offener Rohrschelle 1 kann ein Rohr 10 oder ein anderer Gegenstand in den Schellenkörper 2 der Rohrschelle 1 eingelegt werden. Zu einem Schließen der Rohrschelle 1 beziehungsweise ihres Schellenkörpers 2 sind die Enden des Schellenkörpers 2 beziehungsweise der Schellenbügel 3, 4 auf beiden Seiten der Öffnung 9 mit einem Schließelement 11 verbindbar, das im Ausführungsbeispiel aus einem Blechstreifen gestanzt und gebogen ist. Bei geschlossenem Schellenkörper 2 verläuft das Schließelement 11 in einer Umfangsrichtung des von den beiden Schellenbügeln 3, 4 gebildeten Schellenkörpers 2.

Das Schließelement 11 weist eine Kröpfung 12 auf, das heißt eine doppelte Abwinkelung in entgegengesetzten Richtungen mit einem Radialversatz von etwa einer Dicke der Schellenbügel 3, 4 , die eine rechteckige Öffnung in einem ersten der beiden Schellenbügel 3 auf einer ersten Seite der Öffnung 9 des Schellenkörpers 2 durchgreift. Die von der Kröpfung 12 des Schließelements 11 durchgriffene Öffnung wird hier zur Unterscheidung von der Öffnung 9 des Schellenkörpers 2 als Durchlass 13 bezeichnet. In Ansicht weist das Schließelement 11 im Bereich der Kröpfung 12 eine Hammerkopfform auf, deren Hammerkopf 14 sich auf einer Innenseite des ersten Schellenbügels 3 befindet, so dass das Schließelement 11 gelenkig und nach außen schwenkbar auf der ersten Seite der Öffnung 9 des Schellenkörpers 2 mit dem ersten Schellenbügel 3 verbunden ist. Im Übrigen, das heißt außerhalb der Kröpfung 12 mit dem Hammerkopf 14, befindet sich das Schließelement 11 auf einer Außenseite des Schellenkörpers 2.

Auf einer zweiten Seite der Öffnung 9 des Schellenkörpers 2 weist der zweite Schellenbügel 4 eine mit ihm einstückige, tangential verlaufende Zunge 15 mit zwei in Längsrichtung der Zunge 15 beziehungsweise in der Umfangsrichtung des Schellenkörpers 2 versetzten, nach außen stehenden Hakenpaaren auf. Die Zunge 15 weist auf jeder ihrer Längsseiten zwei in axialer Richtung deckungsgleiche Haken 16 auf, die jeweils ein Hakenpaar bilden. Nachfolgend wird vereinfacht von einem Haken 16 gesprochen werden, wenn ein Hakenpaar gemeint ist. Die Zunge 15 weist zwei in ihrer Längsrichtung, das heißt in tangentialer Richtung beziehungsweise in Umfangsrichtung des Schellenkörpers 2 versetzte Haken 16 beziehungsweise Hakenpaare auf.

Das Schließelement 11 weist eine rechteckige, hier als Fenster 17 bezeichnete Öffnung auf, durch die die Zunge 15 mit den Haken 16 beim Schließen des Schellenkörpers 2 von innen nach außen durchtritt. Außenseiten der Haken 16 bilden schräg zur Umfangsrichtung verlaufende Abweiser 18, die wie in Figur 3 zu sehen beim Schließen des Schellenkörpers 2 gegen eine Innenseite des Schließelements 11 stoßen und dieses nach außen schwenken, bis ein der zweiten Seite der Öffnung zugewandter Rand 19 des Fensters 17 im Schließelement 11 den jeweiligen Haken 16 überwunden hat. Anschließend schwenkt eine erste elastische Einlage 20 auf der Innenseite des ersten Schellenbügels 3, die elastisch von innen gegen den Hammerkopf 14 auf der Innenseite des ersten Schellenbügels 3 drückt, den außerhalb des Schellenkörpers 2 befindlichen Teil des Schließelements 11 nach innen, so dass das Fenster 17 des Schließelements 11 an dem Haken 16 beziehungsweise an einem Hakenpaar einhängt. Werden die beiden Schellenbügel 3, 4 weiter zusammengedrückt, überwindet das Fenster 17 auch den in Umfangsrichtung nächsten Haken 16 beziehungsweise das nächste Hakenpaar und schließt den Schellenkörper 2 enger.

Wie in Figur 5 zu sehen, liegt bei geschlossenem Schellenkörper 2, das heißt bei in einen der Haken 16 beziehungsweise in ein Hakenpaar eingehängtem Schließelement 11, ein der zweiten Seite der Öffnung 9 des Schellenkörpers 2 zugewandter Rand des Durchlasses 13 im ersten Schellenbügel 3 an der in Figur 5 mit Pfeil f gekennzeichneten Stelle auf der ersten Seite der Öffnung 9 innen am Schließelement 11 an, so dass das Schließelement 11 das Ende des ersten Schellenbügels 3 auf der ersten Seite der Öffnung 9 des Schellenkörpers 2 von außen stützt. Dadurch wird einem Aufbiegen des Schellenkörpers 2 beziehungsweise des ersten Schellenbügels 3 durch eine Belastung im Sinne eines Öffnens des Schellenkörpers 2, das heißt im Sinne eines Entfernens der Enden des Schellenkörpers 2 beziehungsweise der Schellenbügel 3, 4 auf beiden Seiten der Öffnung 9 voneinander entgegengewirkt.

Das Ende des ersten Schellenbügels 3 und damit das Ende des Schellenkörpers 2 auf der ersten Seite der Öffnung 9 des Schellenkörpers 2 liegt an der in Figur 5 mit Pfeil p gekennzeichneten Stelle an der Innenseite der Zunge 15 an, die einstückiger Bestandteil des zweiten Schellenbügels 4 ist. Dadurch stützt das Schließelement 11 auch das Ende des Schellenkörpers 2 und des ersten Schellenbügels 3 auf der ersten Seite der Öffnung 9 des Schellenkörpers 2 von außen und damit gegen ein Aufbiegen bei einer Belastung im Sinne eines Öffnens.

Auf einer der zweiten Seite der Öffnung 9 des Schellenbügels 2 zugewandten Seite des Fensters 17 liegt das Schließelement 11 an der in Figur 5 mit Pfeil q gekennzeichneten Stelle innen am Haken 16 an, so dass auch das Schließelement 11 gegen ein Aufbiegen bei einer Belastung des Schellenkörpers 2 im Sinne eines Öffnens abgestützt ist.

Wenn die Rohrschelle 1 geschlossen, das heißt wenn das Schließelement 11 an einem der Haken 16 beziehungsweise an einem der Hakenpaare eingehängt ist, verläuft das Schließelement 11 von der gelenkigen Verbindung mit dem ersten Schellenbügel 3 auf der ersten Seite der Öffnung 9 des Schellenkörpers 2, das heißt von der Kröpfung 12 des Schließelements 11, bis zur Einhängestelle des Schließelements 11 am Schellenkörper 2 beziehungsweise am zweiten Schellenbügel 4 in einen der Haken 16 beziehungsweise in eines der Hakenpaare auf der zweiten Seite der Öffnung 9 des Schellenkörpers 2 in der Umfangsrichtung des Schellenkörpers 2. Dadurch werden bei einer Belastung des geschlossenen Schellenkörpers 2 im Sinne eines Öffnens der Schellenkörper 2 beziehungsweise die beiden Schellenbügel 3, 4 und das Schließelement 11 ausschließlich auf Zug und nicht mit einem Biegemoment belastet, wodurch die Rohrschelle 1 höher im Sinne eines Öffnens belastbar ist ohne zu versagen.

Die Rohrschelle 1 weist die erste elastische Einlage 20 auf der Innenseite des ersten Schellenbügels 3 und eine ebensolche elastische zweite Einlage 21 auf der Innenseite des zweiten Schellenbügels 4 auf. Möglich ist auch eine durchgehende elastische Einlage, die nur an der Öffnung 9 des Schellenkörpers 2 unterbrochen ist (nicht dargestellt). Die elastische erste Einlage 20 auf der Innenseite des ersten Schellenbügels 3 erstreckt sich in der Umfangsrichtung bis zumindest dem Ende des ersten Schellenbügels 3 und damit bis zu dem Ende des Schellenkörpers 2 auf der ersten Seite der Öffnung 9 des Schellenkörpers 2. Über die elastische Einlage 20 stützt das in der Rohrschelle 1 einliegende Rohr 10 den ersten Schellenbügel 3 und damit den Schellenkörper 2 bis zu seinem Ende auf der ersten Seite der Öffnung 9 von innen gegen ein Biegen nach innen.

Mit der Spannschraube 8 an der der Öffnung 9 gegenüberliegenden Umfangsstelle des Schellenkörpers 2 lässt sich der Schellenkörper 2 um das einliegende Rohr 10 festspannen, wenn der Schellenkörper 2 geschlossen, das heißt das Schließelement 11 an einem der Haken 16 beziehungsweise an einem Hakenpaar eingehängt ist.

### Bezugszeichenliste

### Rohrschelle

- f, p, q: Pfeil
- 1: Rohrschelle
- 2: Schellenkörper
- 3: erster Schellenbügel
- 4: zweiter Schellenbügel
- 5: Befestigungsmutter
- 6: erster Flansch
- 7: zweiter Flansch
- 8: Spannschraube
- 9: Öffnung
- 10: Rohr
- 11: Schließelement
- 12: Kröpfung
- 13: Durchlass
- 14: Hammerkopf
- 15: Zunge
- 16: Haken
- 17: Fenster
- 18: Abweiser
- 19: Rand des Fensters 17
- 20: erste elastische Einlage
- 21: zweite elastische Einlage

## Patentansprüche

1. Rohrschelle zur Befestigung eines Rohrs (10), mit einem ringförmigen Schellenkörper (2), der ein in der Rohrschelle (1) befestigtes Rohr (10) bei geschlossener Rohrschelle (1) umschließt, wobei der Schellenkörper (2) eine Öffnung (9) zum Einlegen des Rohrs (10) an einer ersten Umfangsstelle aufweist, und mit einem Schließelement (11) zum Verbinden von Enden des Schellenköpers (2) auf beiden Seiten der Öffnung (9), das auf einer ersten Seite der Öffnung (9) gelenkig und elastisch nach außen federnd mit dem Schellenkörper (2) verbunden ist und das zum Schließen des Schellenkörpers (2) auf einer zweiten Seite der Öffnung (9) an dem Schellenkörper (2) einhängbar ist, so dass das Schließelement (11) die beiden Enden des Schellenkörpers (2) beiderseits der Öffnung (9) verbindet, **dadurch gekennzeichnet, dass** sich das Schließelement (11) von einer gelenkigen Verbindung mit dem Schellenkörper (2) auf der ersten Seite der Öffnung (9) bis zu einer Einhängestelle mit dem Schellenkörper (2) auf der zweiten Seite der Öffnung (9) ausschließlich in einer Umfangsrichtung, einer Sehnenrichtung oder einer Tangentenrichtung des Schellenkörpers (2) erstreckt.

2. Rohrschelle nach Anspruch 1, **dadurch gekennzeichnet, dass** sich die gelenkige Verbindung des Schließelements (11) mit dem Schellenkörper (2) auf der ersten Seite der Öffnung (9) an dem Umfang des Schellenkörpers (2) befindet.

3. Rohrschelle nach Anspruch 1 oder 2, **dadurch gekennzeichnet, dass** sich eine Einhängestelle des Schließelements (11) auf der zweiten Seite der Öffnung (9) an dem Umfang des Schellenkörpers (2) befindet.

4. Rohrschelle nach einem oder mehreren der Ansprüche 1 bis 3, **dadurch gekennzeichnet, dass** zur gelenkigen Verbindung mit dem Schließelement (11) der Schellenkörper (2) einen Durchlass (13) auf der ersten Seite der Öffnung (9) aufweist, den das Schließelement (11) durchgreift, so dass bei geschlossenem Schellenkörper (2) ein der zweiten Seite der Öffnung (9) des Schellenkörpers (2) zugewandter Rand des Durchlasses (13) an einer Innenseite des Schließelements (11) anliegt.

5. Rohrschelle nach einem oder mehreren der vorhergehenden Ansprüche, **dadurch gekennzeichnet, dass** bei geschlossenem Schellenkörper (2) der Schellenköper (2) auf der ersten Seite der Öffnung (9) innen am Schellenkörper (2) auf der zweiten Seite der Öffnung (9) anliegt.

6. Rohrschelle nach einem oder mehreren der vorhergehenden Ansprüche, **dadurch gekennzeichnet, dass** der Schellenkörper (2) einen Haken (16) auf der zweiten Seite der Öffnung (9) aufweist, in den das Schließelement (11) bei geschlossener Rohrschelle (1) eingehängt ist, so dass das Schließelement (11) an einer Innenseite des Hakens (16) anliegt.

7. Rohrschelle nach einem oder mehreren der vorhergehenden Ansprüche, **dadurch gekennzeichnet, dass** der Schellenkörper (2) mehrere in der Umfangsrichtung zueinander versetzte Haken (16) auf der zweiten Seite der Öffnung (9) zu einem wahlweisen Einhängen des Schließelements (11) aufweist.

8. Rohrschelle nach einem oder mehreren der vorhergehenden Ansprüche, **dadurch gekennzeichnet, dass** an einer Innenseite des Schellenkörpers (2) eine erste elastische Einlage (20) angeordnet ist, die auf der ersten Seite der Öffnung (9) in der Umfangsrichtung bis mindestens zum Ende des Schellenkörpers (2) reicht.

9. Rohrschelle nach einem oder mehreren der vorhergehenden Ansprüche, **dadurch gekennzeichnet, dass** der Schellenkörper (2) einen Abweiser (18) für das Schließelement (11) auf der zweiten Seite der Öffnung (9) des Schellenkörpers (2) aufweist, der das Schließelement (11) beim Schließen der Rohrschelle (1) vom Schellenkörper (2) nach außen schwenkt, bis es den Abweiser (18) überwunden hat.
